# EUROPÄISCHE PATENTSCHRIFT

(11) **EP 1 305 584 B1**
(45) Veröffentlichungstag und Bekanntmachung des Hinweises auf die Patenterteilung: **13.10.2004**
(21) Anmeldenummer: 01953896.6
(22) Anmeldetag: 13.07.2001
(51) Int. Cl.: G01L 7/08

(54) **HOCHDRUCKSENSOR, VERFAHREN UND WERKZEUG ZU SEINER HERSTELLUNG**
HIGH PRESSURE SENSOR, METHOD AND TOOL FOR PRODUCING THE SAME
CAPTEUR DE HAUTE PRESSION, PROCEDE ET OUTIL PERMETTANT DE LE PRODUIRE

(30) Priorität: 15.07.2000 DE 10034460
(43) Veröffentlichungstag der Anmeldung: 02.05.2003
(73) Patentinhaber: ROBERT BOSCH GMBH, 70442 Stuttgart (DE)
(72) Erfinder: WINGSCH, Volker, 72762 Reutlingen (DE)
(86) Internationale Anmeldenummer: PCT/DE2001/002558
(87) Internationale Veröffentlichungsnummer: WO 2002/006784

(56) Entgegenhaltungen:
- WO-A-94/25843
- DE-A- 3 107 891
- GB-A- 1 088 723

## Beschreibung

Die vorliegende Erfindung betrifft einen Hochdrucksensor sowie ein Verfahren und ein Werkzeug zu seiner Herstellung.

### Stand der Technik

Hochdrucksensoren werden in zahlreichen Anwendungsbereichen der Automobilindustrie eingesetzt. Sie kommen zum Beispiel bei Einspritzsystemen, Antiblockiersystemen, Fahrdynamikregelungen und vielem anderen zum Einsatz.

Herkömmliche Hochdrucksensoren bestehen aus einem Verformungskörper, auch Substrat genannt, auf dem in Dünnschichttechnologie ein Schichtsystem, bestehend aus einer Isolation, zum Beispiel aus einem Siliciumoxid, einer strukturierten Funktionsschicht, zum Beispiel aus Poly-Si oder NiCr, eine Kontaktierung sowie eine Passivierung aufgebracht ist. Über die Funktionsschicht wird eine mechanische Deformation einer Membran des Verformungskörpers in ein elektrisches Signal umgewandelt.

Der aus Verformungskörper und aufgebrachter Dünnschicht bestehende Sensor wird anschließend mit einem Druckstutzen und einem Spritzgußgehäuse zusammengebaut, mit Kontaktierungen versehen und gegebenenfalls mit einer Auswerteelektronik ausgestattet, um einen kompletten Hochdrucksensor zu bilden.

Ein kritischer Schritt bei der Herstellung des Hochdrucksensors ist das Zusammenfügen von Druckstutzen und Verformungskörper. Diese Verbindung muß zum einen absolut dicht sein, damit nicht das über den Druckstutzen an den Verformungskörper herangeführte Druckmedium an einer Undichtigkeit der Schweißnaht entweicht. Weiterhin soll die Verbindung möglichst spannungsfrei sein, damit nicht durch den Schweißvorgang verursachte interne Spannungen des Verformungskörpers dessen Meßsignal verfälschen und/oder zu einer nichtkontrollierbaren Streuung der Empfindlichkeit und des Ansprechverhaltens von in Serie gefertigten Drucksensoren führen.

Gegenwärtig wird zum Verschweißen von Druckstutzen und Verformungskörper im wesentlichen das Verfahren des Elektronenstrahlschweißens angewendet. Dieses Verfahren ist relativ aufwendig, da es im Vakuum ausgeführt werden muß, und es erfordert viel Bearbeitungszeit, weil bei jedem einzelnen Hochdrucksensor der Elektronenstrahl um dessen ganzen Umfang herumgeführt werden muß, um eine geschlossene Schweißnaht zu bilden. Dabei ergibt sich ferner das Problem, daß infolge der unterschiedlichen thermischen Bedingungen zu Beginn und Ende eines Schweißvorgangs Spannungen nicht gleichmäßig über den Umfang der Schweißnaht verteilt sind. Außerdem führt das Elektronenstrahlschweißen zur Erzeugung von Abbrand, der zeit- und kostenaufwendig entfernt werden muss.

So wird in der DE 31 07 891 A1 ein Verfahren zur Herstellung einer Metallmembran beschrieben, bei der eine Metallmembran mit einem kegelstumpfförmigen Fassungsring verschweißt wird. Dabei wird die Schweißverbindung zwischen gespannter Membran und Fassungsring unter tangential fortschreitender, punktförmiger Erhitzung mindestens ein weiteres Mal beispielsweise durch einen Elektronenstrahl überschweißt.

Eine einfache und kostengünstige Alternative zum Elektronenstrahlschweißen könnte das Widerstandsschweißen sein. Dieses Verfahren hat jedoch den Nachteil, dass zum Einprägen des Schweißstroms in das Werkstück eine Kontaktfläche erforderlich ist, über die Druck auf den zu schweißenden Gegenstand ausgeübt wird und deren Oberfläche nicht zu klein sein darf, um eine übermäßige Erhitzung des Kontaktbereichs durch den eingespeisten Schweißstrom zu verhindern. Um eine solche Kontaktfläche in ausreichender Größe zu schaffen, wäre es erforderlich, die Verformungskörper seitlich zu vergrößern, was dazu führen würde, dass die Ausbeute an Verformungskörpern, die aus einem Wafer gegebener Größe angefertigt werden kann, abnimmt. Auch die Zahl der Verformungskörper, die jeweils gemeinsam in einem Beschichtungsprozess weiterverarbeitet werden könnten, würde dadurch geringer, so dass die Kostenreduzierung, die beim Zusammenbau durch ein einfacheres Schweißverfahren erreichbar wären, durch. Mehrauf- wand bei der Herstellung der Verformungskörper mehr als zunichte gemacht werden.

### Vorteile der Erfindung

Durch die vorliegende Erfindung werden ein Hochdrucksensor, ein Verfahren sowie ein Werkzeug zu seiner Herstellung geschaffen, die ein preiswertes Widerstandsschweißen der Verbindung zwischen Verformungskörper und Druckstutzen bei geringem Verbrauch an Waferfläche erlauben. Insbesondere soll nicht mehr Waferfläche benötigt werden als bei dem herkömmlichen Elektronenstrahlschweißen, bezeihungsweise weniger als beim Widerstandsschweißen über einen 1 mm breite umlaufenden Bund.

Dieser Vorteil wird zum einen bei einem Hochdrucksensor mit einem Verformungskörper und einem mit dem Verformungskörper durch eine Schweißnaht verbundene Stutzen dadurch erreicht, daß der Verformungskörper einen kegelstumpfförmigen Umfangsabschnitt aufweist, über den ein Schweißstrom in den Verformungskörper eingeleitet werden kann.

Der kegelstumpfförmige Umfangsabschnitt konvergiert zum Druckstutzen hin. Dies erlaubt zwar kein direktes Aufsetzen der Elektrode auf den Verformungskörper, statt dessen kann der Strom aber von der Elektrode zunächst in einen Kontaktring und von diesem über den den Kontaktring berührenden kegelstumpfförmigen Umfangsabschnitt in den Verformungskörper weitergeleitet werden. Der Kontaktring kann je nach Ausgestaltung des Hochdrucksensors an diesem verbleiben oder nach Beendigung des Schweißvorgangs entfernt werden.

Der Verformungskörper weist vorteilhafterweise einen umlaufenden Bund auf, der die Handhabung des Verformungskörpers im Laufe von dessen Herstellung vereinfacht. In einem solchen Fall ist der kegelstumpfförmige Umfangsabschnitt vorzugsweise platzsparend zwischen dem Bund und der Schweißnaht angeordnet. Die Breite des Bundes beträgt vorteilhafterweise zwischen 0,25 und 0,4 mm. Dieser Bund dient allein der Handhabung, zum Einprägen des Schweißstromes sollte er nicht verwendet werden.

Um eine übermäßige Erwärmung und gegebenenfalls eine ungewollte Verschweißung des Kontaktrings an dem Verformungskörper zu vermeiden, ist die Oberfläche des kegelstumpfförmigen Umfangsabschnitts vorteilhafterweise größer als die Querschnittsfläche der Schweißnaht.

Der Kontaktring ist an dem kegelstumpfförmigen Abschnitt vorzugsweise ohne eine direkte leitfähige Verbindung zu dem Druckstutzen angeordnet, so daß ein über den Kontaktring eingespeister Schweißstrom vollständig durch einen Kontaktbereich zwischen dem Verformungskörper und dem Druckstutzen fließen muß, an dem die Schweißnaht gebildet werden soll.

Das Schmelzen von Material an der Schweißnaht führt dazu, daß der Verformungskörper und der Kontaktring beim Schweißen nach unten verschoben werden. Um bei dieser Verschiebung einen definierten Gegendruck zum Druck der Elektrode auf den Kontaktring auszuüben, ist vorzugsweise ein Federring an der der Schweißnaht zugewandten Seite des Kontaktrings angeordnet. Dieser Federring besteht vorzugsweise aus einem elektrisch nichtleitenden, elastischen Material wie etwa einem Hartgummi.

Bei der Herstellung eines Hochdrucksensors wie oben beschrieben werden der Verformungskörper und der Stutzen gegeneinander gedrückt, und ein elektrischer Schweißstrom wird von dem Kontaktring aus durch den Verformungskörper in den Stutzen geleitet, um die Schweißnaht zwischen Verformungskörper und Stutzen zu bilden. Auf diese Weise entsteht die Schweißnaht auf dem gesamten Umfang des Stutzens beziehungsweise des Verformungskörpers gleichzeitig, das heißt die thermischen Bedingungen bei ihrer Entstehung sind auf dem gesamten Umfang gleich. Die nach dem Schweißen verbleibenden Restspannungen zwischen dem Stutzen und dem Verformungskörper können daher im Vergleich zum Elektronenstrahlschweißen gering gehalten werden, was die Genauigkeit der nach dem Verfahren hergestellten Sensoren verbessert und die Streuung ihrer Eigenschaften reduziert.

Dabei wird vorzugsweise die Schweißelektrode ohne Kontakt zum Verformungskörper auf den Kontakten aufgesetzt, um den Schweißstrom in den Kontaktring einzuspeisen. Die Schweißelektrode kann daher einen großen Druck auf den Kontaktring ausüben und so den elektrischen Übergangswiderstand zwischen der Elektrode und dem Kontaktring gering halten, ohne daß dies zur Gefahr einer Beschädigung des Verformungskörpers durch den ausgeübten Druck führt.

Um einen indirekten Stromfluß zwischen der Elektrode und dem Verformungskörper sicher auszuschließen, wird vorzugsweise vor dem Einspeisen des Schweißstroms eine isolierende Schürze zwischen dem äußeren Umfang des Verformungskörpers und der ihn ringförmig umgreifenden Schweißelektrode eingeführt.

Um den für die Schweißung notwendigen Druck des Verformungskörpers gegen den Stutzen auszuüben, ist zweckmäßigerweise ein nichtleitender Einsatz der Schweißelektrode vorgesehen. Um das empfindliche Dünnschichtsystem des Verformungskörpers zu schonen, übt dieser Einsatz die Kraft auf einem radial äußeren Bereich des Verformungskörpers, vorzugsweise dessen Bund, aus.

Vorzugsweise ist dieser Einsatz federbelastet.

Weitere Merkmale und Vorteile der Erfindung ergeben sich aus der nachfolgenden Beschreibung eines Ausführungsbeispiels mit Bezug auf die beigefügte Figuren.

### Figuren

Es zeigen:
Figur 1 einen Drucksensor im Schnitt vor dem Verschweißen von Verformungskörper und Druckstutzen; und
Figur 2 den Hochdrucksensor aus Figur 1 beim Verschweißen.

### Beschreibung des Ausführungsbeispiels

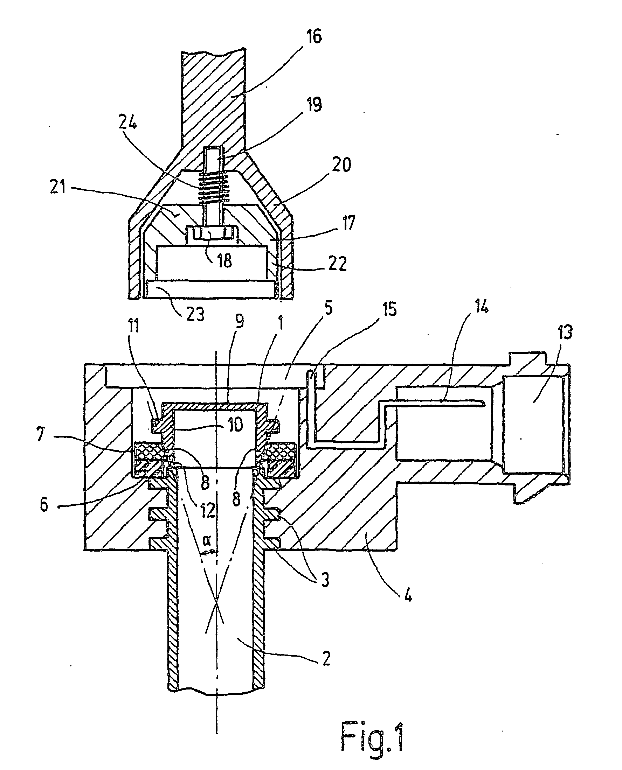

Der in Figur 1 als Beispiel dargestellte Hochdrucksensor umfaßt einen Druckstutzen 2, der an seinem in der Figur gezeigten Ende mehrere umlaufende Rippen 3 trägt. Mit Hilfe der Rippen 3 ist der Druckstutzen 2 in einem angespritzten Gehäuse 4 verankert.

Das Gehäuse 4 weist an seiner von dem Druckstutzen 2 abgewandten, in der Figur oben liegenden Rückseite eine Vertiefung 5 auf. Am Boden dieser Vertiefung 5 ist ein Federring 6 aus Hartgummi angeordnet. Auf dem Federring 6 liegt ein Kontaktring 7 aus einem weichen, elektrisch gut leitenden Metall. Der Ring 7 kann zum Beispiel aus Kupfer, vorzugsweise weichgeglühtem Kupfer, Aluminium, Zinn, Blei oder dergleichen gegebenenfalls mit einer den elektrischen kontaktverbessernden Edelmetallbeschichtung, bestehen. Der Kontaktring 7 weist eine kegelstumpfförmige innere Umfangsfläche auf, die einen komplementär geformten kegelstumpfförmigen Umfangsabschnitt 8 eines Verformungskörpers 1 berührt.

Der Verformungskörper 1 hat die Form eines umgekehrten Bechers oder Tiegels mit einem dünnwandigen Boden 9, der unter der Einwirkung eines bei dem fertigen Hochdrucksensor über den Druckstutzen 2 zuzuführenden Drucks formbar ist, und einer umlaufenden Wand 10. Die Stärke der Wand 10 ist groß im Vergleich zu der des Bodens 9, da in ihr eine (in der Figur nicht dargestellte) Nut untergebracht ist, die als Verdrehsicherung des Verformungskörpers 1 dienen soll.

Der kegelstumpfförmige Umfangsabschnitt 8 ist an der Seitenwand 10 zwischen einem umlaufenden Bund 11 und dem stumpf an den Druckstutzen 2 anstoßenden unteren Rand 12 des Verformungskörpers 1 angeordnet. Die Breite des Bundes in radialer Richtung beträgt ca. 0,5 mm. Der Öffnungswinkel α des Kegels beträgt ca. 10°.

Der Boden 9 des Verformungskörpers trägt ein (in der Figur nicht dargestelltes) Schichtsystem, das in Dünnschichttechnik erzeugt ist und eine Isolationsschicht, eine strukturierte Funktionsschicht, deren elektrische Eigenschaften durch eine Verformung des Bodens 9 veränderbar sind, eine Passivierungsschicht und Kontaktierungsfelder umfaßt.

Das Gehäuse 4 weist einen einteilig angeformten Steckverbinder 13 mit Kontaktstiften 14 auf, die auf einem Teil ihrer Länge durch die Kunststoffmasse des Gehäuses 4 umspritzt sind und mit einem Ende 15 in die Vertiefung 5 münden, um dort in einem späteren Schritt der Herstellung mit den Kontaktierungsfeldern der Funktionsschicht verbunden zu werden.

Oberhalb der Vertiefung 5 ist eine Elektrode 16 gezeigt, mit deren Hilfe eine Schweißnaht zwischen dem Verformungskörper 1 und dem Druckstutzen 2 im Bereich des Randes 12 gebildet werden kann. Diese Elektrode hat im wesentlichen die Form eines Bechers 20 mit einem an den (hier kegelförmig zulaufenden) Boden des Bechers anschließenden Schaft aus einem elektrisch gut leitenden Metall und einem im. Innern des Bechers 20 angeordneten, elektrisch isolierenden Einsatz 17. Eine Schraube 18 erstreckt sich durch eine Bohrung des Einsatzes 17 und ist mit einer Gewindebohrung 19 im Bodenbereich des Bechers 20 der Elektrode 16 im Eingriff. Eine um die Schraube 18 herum angeordnete kräftige Spiralfeder 24 übt auf den Einsatz 17 eine Kraft nach unten aus und hält ihn so zwischen sich und dem Kopf der Schraube 18 eingespannt.

Der Einsatz 17 umfaßt im wesentlichen eine kräftige Grundplatte 21, einen an deren äußerem Umfang angeformten ringförmigen Abschnitt 22 sowie eine den ringförmigen Abschnitt nach unten verlängernde dünnwandige Schürze 23.

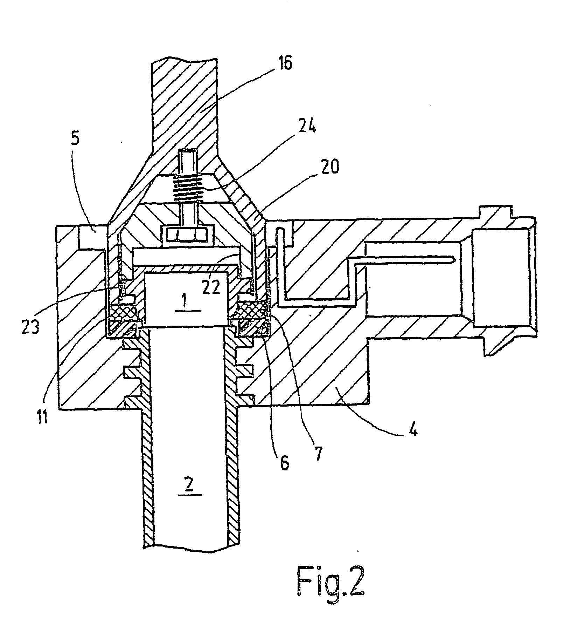

Figur 2 zeigt die Elektrode 16 im Eingriff in der Vertiefung 5 des Gehäuses 4. Der Außendurchmesser des Bechers der Elektrode 16 entspricht mit geringem Spiel dem Innendurchmesser der Vertiefung 5, so daß die Elektrode 16 in die Vertiefung 5 einführbar ist. Beim Absenken der Elektrode 16 aus der Figur 1 gezeigten Stellung kommt zunächst der untere Rand des ringförmigen Abschnitts 22 auf dem Bund 11 zu liegen, wobei die Schürze 23 den Bund 11 rings umgibt. So wird ein elektrisch leitfähiger Kontakt zwischen der Elektrode 16 und dem Verformungskörper 1 durch die Schürze 23 verhindert.

Im Laufe der weiteren Absenkung der Elektrode 16 in die in Figur 2 gezeigt Stellung wird die Spiralfeder 24 zusammengedrückt, und ihre Kraft überträgt sich über den Einsatz 17 auf den Bund 11 und von dort auf den kegelstumpfförmigen Umfangsabschnitt 8, der den Kontaktring 7 berührt. Wenn schließlich der untere Rand des Bechers 20 der Elektrode 16 den Kontaktring 7 berührt, kann ein Schweißstrom von der Elektrode 16 durch den Kontaktring 7 und die Seitenwand 10 des Verformungskörpers 1 in den Druckstutzen 2 fließen.

Der Durchmesser des Kontaktrings 7 bzw. sein Kontaktquerschnitt zur Elektrode 16 kann großzügig bemessen werden, und ein Verschweißen der Elektrode 16 am Kontaktring oder ein Abbrand der Elektrode können so sicher vermieden werden, ohne daß dies zu nennenswerten Mehrkosten bei der Herstellung des erfindungsgemäßen Hochdrucksensors führt. Wenn stattdessen der Schweißstrom direkt von der Elektrode in den Verformungskörper 1 eingespeist werden müßte, so würde dies eine Vergrößerung von dessen Querschnittsfläche erfordern, die Zahl der Verformungskörper, die aus einem einzelnen Substrat gefertigt werden könnten bzw. die in einem einzelnen Dünnschichtprozeß mit Sensorschichtsystemen versehen werden könnten, würde abnehmen, was die Herstellung der einzelnen Verformungskörper entsprechend verteuern würde.

Genauso wie die Berührungsfläche zwischen der Elektrode 16 und dem Kontaktring 7 kann bei dem erfindungsgemäßen Hochdrucksensor auch die Berührungsfläche zwischen Kontaktring 7 und Verformungskörper 1 im Bereich des kegelstumpfförmigen Umfangsabschnitts 8 ohne Schwierigkeiten groß genug gemacht werden, um ein Verschweißen zwischen beiden Teilen sicher zu verhindern. So ist sichergestellt, daß die Leistung des Schweißstroms im wesentlichen am Übergang zwischen dem Verformungskörper 1 und dem Druckstutzen 2 abfällt, dessen Querschnitt deutlich kleiner ist als die Berührungsflächen zwischen der Elektrode 16 und dem Kontaktring 7 bzw. zwischen dem Kontaktring 7 und dem Verformungskörper 1.

Die Kraft, mit der die Elektrode 16 angedrückt wird, ist so bemessen, daß durch die Kraft der komprimierten Feder 24 der Verformungskörper 1 sicher gegen den Kontaktring 7 drückt und gegebenenfalls unter geringfügiger Verformung des Federrings 6 der untere Rand 12 des Verformungskörpers gegen den Druckstutzen 2 drückt. Die vom Rand des Bechers 20 der Elektrode 16 direkt auf den Kontaktring 7 übertragene Kraft ist dem gegenüber klein, so daß sie keine weitere Kompression des Federrings 6 bewirkt, die den Kontakt zwischen den kegelstumpfförmigen Flächen von Kontaktring 7 und Verformungskörper 1 beeinträchtigen könnte. Wenn anschließend der Schweißstrom durch den Verformungskörper geleitet wird und diesen im Bereich des unteren Randes 12 zum Schmelzen bringt, so ermöglicht dies der Feder 24, den Verformungskörper 1 im Bereich der entstehenden Schweißnaht geringfügig zu stauchen und sich dadurch zu entspannen. Die dadurch bewirkte Setzbewegung des Verformungskörpers 1 unter gleichzeitiger weiterer Kompression des Federrings 6 beendet den leitenden Kontakt zwischen dem Becher 20 der Elektrode 16 und dem Kontaktring 7, so daß der Schweißstrom nach erfolgtem Aufschmelzen selbsttätig abbricht.

Bei einer alternativen Ausgestaltung kann auch eine Elektrode mit einem starr verbundenen nichtleitenden Einsatz verwendet werden. In diesem Fall sind allerdings strenge Anforderungen an die Maßhaltigkeit des Einsatzes und des Verformungskörpers 1 zu stellen, um zu gewährleisten, daß der Einsatz nicht zu früh auf den Verformungskörper 1 trifft und so einen elektrischen Kontakt zwischen dem Becher der Elektrode und dem Kontaktring 7 verhindert bzw. daß nicht ein vorzeitiger Kontakt zwischen dem Becher der Elektrode und dem Kontaktring 7 eine Stauchung des Federringes 6 und damit möglicherweise eine Beeinträchtigung des Kontakts zwischen dem Kontaktring 7 und dem kegelstumpfförmigen Umfangsabschnitt 8 bewirkt.

## Patentansprüche

1. Hochdrucksensor mit einem Verformungskörper (1) und einem mit dem Verformungskörper (1) durch eine Schweißnaht verbundenen Stutzen (2), **dadurch gekennzeichnet, dass** der Verformungskörper (1) einen kegelstumpfförmigen Umfangsabschnitt (8) aufweist, wobei der kegelstumpförmige Umfangsabschnitt (8) zum Druckstutzen (2) hin konvergiert.

2. Hochdrucksensor nach Anspruch 1, **dadurch gekennzeichnet, dass** der kegelstumpfförmige Umfangsabschnitt einen Öffnungswinkel ( α ) von 5 bis 20°, vorzugsweise ca. 10°, hat.

3. Hochdrucksensor nach Anspruch 1 oder 2, **dadurch gekennzeichnet, dass** der Verformungskörper (1) einen umlaufenden Bund (11) aufweist, und dass der kegelstumpfförmige Umfangsabschnitt (8) zwischen dem Bund (11) und der Schweissnaht angeordnet ist.

4. Hochdrucksensor nach Anspruch 3, **dadurch gekennzeichnet, dass** der Bund (11) eine Breite zwischen 0,25 und 0,75 mm, vorzugsweise zwischen 0,4 und 0,6 mm, aufweist.

5. Hochdrucksensor nach einem der vorhergehenden Ansprüche, **dadurch gekennzeichnet, dass** die Oberfläche des kegelstumpfförmigen Umfangsabschnitts (8) grösser als die Querschnittsfläche der Schweissnaht ist.

6. Hochdrucksensor nach einem der vorhergehenden Ansprüche, **dadurch gekennzeichnet, dass** ein elektrisch leitfähiger Kontaktring (7) an dem kegelstumpfförmigen Umfangsabschnitt (8) ohne eine direkte leitfähige Verbindung zu dem Druckstutzen (2) angeordnet ist.

7. Hochdrucksensor nach Anspruch 6, **dadurch gekennzeichnet, dass** ein Federring (6) an der der Schweissnaht zugewandten Seite des Kontaktrings (7) angeordnet ist.

8. Hochdrucksensor nach Anspruch 7, **dadurch gekennzeichnet, dass** der Federring (6) aus einem elastischen nichtleitenden Material gebildet ist.

9. Verfahren zur Herstellung eines Hochdrucksensors nach einem der Ansprüche 6-8, **dadurch gekennzeichnet, dass** der Verformungskörper (1) und der Stutzen (2) gegeneinander gedrückt und ein elektrischer Schweissstrom von dem Kontaktring (7) durch den Verformungskörper (1) in den Stutzen (2) geleitet wird, um die Schweissnaht zu bilden.

10. Verfahren nach Anspruch 9, **dadurch gekennzeichnet, dass** eine Schweisselektrode (16) ohne leitenden Kontakt zum Verformungskörper (1) auf den Kontaktring (7) aufgesetzt wird, um den Schweissstrom in den Kontaktring (7) einzuspeisen.

11. Verfahren nach Anspruch 10, **dadurch gekennzeichnet, dass** vor dem Einspeisen des Schweissstroms eine isolierende Schürze (23) zwischen dem äusseren Umfang des Verformungskörpers (1) und der Schweisselektrode (16) eingeführt wird.

12. Verfahren nach Anspruch 10 oder 11, **dadurch gekennzeichnet, dass** ein federbelasteter nichtleitender Einsatz (17) der Schweisselektrode (16) die Kraft zum Gegeneinanderdrücken von Verformungskörper (1) und Stutzen (2) ausübt.

13. Verfahren nach Anspruch 12, **dadurch gekennzeichnet, dass** der Einsatz (17) die Kraft auf einen radial äusseren Bereich des Verformungskörpers (1), vorzugsweise den Bund (11), ausübt.

14. Schweisselektrode zur Herstellung eines Hochdrucksensors nach einem der Ansprüche 1 bis 8, **dadurch gekennzeichnet, dass** die Schweisselektrode in Form eines Bechers (20) ausgebildet ist, und dass im Inneren des Bechers (20) ein nichtleitender Einsatz (17) axial verlagerbar ist.

15. Schweisselektrode nach Anspruch 14, **dadurch gekennzeichnet, dass** der Einsatz (17) federbelastet ist.

16. Schweisselektrode nach Anspruch 14 oder 15, **dadurch gekennzeichnet, dass** der nichtleitende Einsatz (17) einen ringförmigen Abschnitt (22) zum Berühren des Verformungskörpers (1) nur in dessen Randbereich aufweist.

17. Schweisselektrode nach Anspruch 16, **dadurch gekennzeichnet, dass** der ringförmige Abschnitt durch eine Schürze (23) verlängert ist, deren freier Innendurchmesser grösser als der des ringförmigen Abschnitts (22) ist.

## Claims

1. High-pressure sensor having a deformation member (1) and a connection piece (2) connected to the deformation member (1) by a weld seam, **characterized in that** the deformation member (1) has a frustoconical circumferential portion (8), the frustoconical circumferential portion (8) converging towards the pressure connection piece (2).

2. High-pressure sensor according to Claim 1, **characterized in that** the frustoconical circumferential portion has an apex angle (α) of from 5 to 20°, preferably about 10°.

3. High-pressure sensor according to Claim 1 or 2, **characterized in that** the deformation member (1) has a peripheral collar (11), and **in that** the frustoconical circumferential portion (8) is arranged between the collar (11) and the weld seam.

4. High-pressure sensor according to Claim 3, **characterized in that** the collar (11) has a width of between 0.25 and 0.75 mm, preferably between 0.4 and 0.6 mm.

5. High-pressure sensor according to one of the preceding claims, **characterized in that** the surface of the frustoconical circumferential portion (8) is greater than the cross-sectional area of the weld seam.

6. High-pressure sensor according to one of the preceding claims, **characterized in that** an electrically conductive contact ring (7) is arranged on the frustoconical circumferential portion (8), without a direct conductive connection to the pressure connection piece (2).

7. High-pressure sensor according to Claim 6, **characterized in that** a spring washer (6) is arranged on the side of the contact ring (7) that is facing the weld seam.

8. High-pressure sensor according to Claim 7, **characterized in that** the spring washer (6) is formed from an elastic non-conducting material.

9. Method for producing a high-pressure sensor according to one of Claims 6-8, **characterized in that** the deformation member (1) and the connection piece (2) are pressed against each other and an electrical welding current is passed from the contact ring (7) through the deformation member (1) into the connection piece (2) in order to form the weld seam.

10. Method according to Claim 9, **characterized in that** a welding electrode (16) is placed onto the contact ring (7) without conducting contact with respect to the deformation member (1), in order to feed the welding current into the contact ring (7).

11. Method according to Claim 10, **characterized in that**, before the feeding in of the welding current, an insulating apron (23) is inserted between the outer circumference of the deformation member (1) and the welding electrode (16).

12. Method according to Claim 10 or 11, **characterized in that** a spring-loaded non-conducting insert (17) of the welding electrode (16) exerts the force for pressing the deformation member (1) and the connection piece (2) against each other.

13. Method according to Claim 12, **characterized in that** the insert (17) exerts the force onto a radially outer region of the deformation member (1), preferably the collar (11).

14. Welding electrode for producing a high-pressure sensor according to one of Claims 1 to 8, **characterized in that** the welding electrode is configured in the form of a cup (20), and **in that** a non-conducting insert (17) is axially displaceable in the interior of the cup (20).

15. Welding electrode according to Claim 14, **characterized in that** the insert (17) is spring-loaded.

16. Welding electrode according to Claim 14 or 15, **characterized in that** the non-conducting insert (17) has an annular portion (22) for contacting the deformation member (1) only in the edge region of the latter.

17. Welding electrode according to Claim 16, **characterized in that** the annular portion is extended by an apron (23), the free inside diameter of which is greater than that of the annular portion (22).

## Revendications

1. Capteur haute pression comprenant un corps de déformation (1) et un raccord (2) relié au corps de déformation (1) par un joint de soudure,
**caractérisé en ce que**
le corps de déformation (1) présente un segment circonférentiel tronconique (8), le segment circonférentiel tronconique (8) étant convergent vers le raccord de pression (2).

2. Capteur haute pression selon la revendication 1,
**caractérisé en ce que**
le segment circonférentiel tronconique présente un angle d'ouverture (a) de 5 à 20°, de préférence de 10° environ.

3. Capteur haute pression selon la revendication 1 ou 2,
**caractérisé en ce que**
le corps de déformation (1) présente un collet périphérique (11), et le segment circonférentiel tronconique (8) est disposé entre le collet (11) et le joint de soudure.

4. Capteur haute pression selon la revendication 3,
**caractérisé en ce que**
le collet (11) présente une largeur comprise entre 0,25 et 0,75 mm, de préférence comprise entre 0,4 et 0,6 mm.

5. Capteur haute pression selon l'une quelconque des revendications précédentes,
**caractérisé en ce que**
la surface du segment circonférentiel tronconique (8) est plus grande que la section transversale du joint de soudure.

6. Capteur haute pression selon l'une quelconque des revendications précédentes,
**caractérisé en ce qu'**
une bague de contact (7) électriquement conductrice est disposée au niveau du segment circonférentiel tronconique (8) sans une liaison conductrice directe vers le raccord de pression (2).

7. Capteur haute pression selon la revendication 6,
**caractérisé en ce qu'**
une rondelle-ressort (6) est disposée au niveau de la face de la bague de contact (7) en regard du joint de soudure.

8. Capteur haute pression selon la revendication 7,
**caractérisé en ce que**
la rondelle-ressort (6) est réalisée à partir d'un matériau élastique non-conducteur.

9. Procédé de fabrication d'un capteur haute pression selon l'une quelconque des revendications 6-8,
**caractérisé en ce que**
le corps de déformation (1) et le raccord (2) sont appliqués l'un contre l'autre et un courant de soudage électrique est conduit depuis la bague de contact (7) à travers le corps de déformation (1) dans le raccord (2) pour former le joint de soudure.

10. Procédé selon la revendication 9,
**caractérisé en ce qu'**
une électrode de soudage (16) est placée sur la bague de contact (7) sans contact conducteur vers le corps de déformation (1), pour introduire le courant de soudage dans la bague de contact (7).

11. Procédé selon la revendication 10,
**caractérisé en ce qu'**
avant l'introduction du courant de soudage une jupe isolante (23) est insérée entre la périphérie extérieure du corps de déformation (1) et l'électrode de soudage (16).

12. Procédé selon la revendication 10 ou 11,
**caractérisé en ce qu'**
un insert (17) de l'électrode de soudage (16) non-conducteur sollicité par ressort exerce la force pour appliquer l'un contre l'autre le corps de déformation (1) et le raccord (2).

13. Procédé selon la revendication 12,
**caractérisé en ce que**
l'insert (17) exerce la force sur une zone du corps de déformation (1) radialement extérieure, notamment sur le collet (11).

14. Electrode de soudage pour la fabrication d'un capteur haute pression selon l'une quelconque des revendications 1 à 8,
**caractérisée en ce que**
l'électrode de soudage présente la forme d'un gobelet (20), et à l'intérieur du gobelet (20) un insert (17) non-conducteur peut être déplacé axialement.

15. Electrode de soudage selon la revendication 14,
**caractérisée en ce que**
l'insert (17) est sollicité par ressort.

16. Electrode de soudage selon la revendication 14 ou 15,
**caractérisée en ce que**
l'insert (17) non-conducteur présente un segment annulaire (22) pour ne toucher le corps de déformation (1) que dans la zone périphérique de celui-ci.

17. Electrode de soudage selon la revendication 16,
**caractérisée en ce que**
la section annulaire est prolongée par une jupe (23) dont le diamètre intérieur libre est supérieur à celui du segment annulaire (22).
